(19) Europäisches Patentamt
European Patent Office
Office européen des brevets

(11) Publication number: 0 102 158 B1

(12) EUROPEAN PATENT SPECIFICATION

(45) Date of publication of patent specification: 27.01.88

(51) Int. Cl.$^4$: C 08 J 5/04, C 08 J 3/18

(21) Application number: 83304021.5

(22) Date of filing: 11.07.83

# (54) Method of producing fibre-reinforced composition.

(30) Priority: 28.07.82 GB 8221752

(43) Date of publication of application: 07.03.84 Bulletin 84/10

(45) Publication of the grant of the patent: 27.01.88 Bulletin 88/04

(84) Designated Contracting States: AT BE CH DE FR GB IT LI NL SE

(56) References cited:
EP-A-0 013 244
EP-A-0 056 703
DE-A-2 129 163
DE-B-1 629 830
GB-A-1 259 085
GB-A-1 302 048
GB-A-1 352 391
US-A-4 269 953

(73) Proprietor: IMPERIAL CHEMICAL INDUSTRIES PLC
Imperial Chemical House Millbank
London SW1P 3JF (GB)

(72) Inventor: Cogswell, Frederic Neil
67 Daniells
Welwyn Garden City Herts (GB)
Inventor: Nield, Eric
Cherry House 27 Hutton Village
Guisborough Cleveland (GB)
Inventor: Staniland, Philip Anthony
1 Desborough Drive
Tewin Wood Herts (GB)

(74) Representative: Downer, John Michael et al
Imperial Chemical Industries PLC
Legal Department: Patents
PO Box 6 Bessemer Road
Welwyn Garden City Herts, AL7 1HD (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 102 158 B1

Courier Press, Leamington Spa, England.

**Description**

This invention relates to a method of producing fibre-reinforced compositions in which long fibres are contained in a thermoplastic polymer matrix.

Processers are known in which a fibre-reinforced composition is produced in a continuous manner by pulling a continuous tow or roving of fibres through a bath of low viscosity thermosettable resin to impregnate the fibres. The impregnated composition is subsequently cured by heating. Although the products produced have found great utility as constructional materials they lack the versatility of products impregnated with thermoplastic polymers in that once the product has been cured it is extremely difficult for form an article of a different shape from the cured product. There has been no significant development of a comparable continuous process using a thermoplastic polymer. The use of melts of thermoplastic polymers does not give a satisfactory product because the viscosity of the melt of a polymer of normal molecular weight is too high to allow rapid impregnation of a fibre tow or roving. Limited use has been made of solutions of thermoplastics, particularly in non-continuous processes where a fibre mat is impregnated with a solution and subsequently compression moulded. There are severe restraints on the use of a solution process in a continuous process because of the difficulties in preparing a solution containing more than about 20% of polymer and the subsequent difficulty in removing and recovering the large quantities of solvent involved with such dilute solutions. A method has been proposed of using low molecular weight thermoplastic polymers which inherently are of low viscosity (preferably below 30 Ns/$m^2$). Such polymers give rise to good fibre wetting and compositions of surprisingly high mechanical properties. However, such polymers generally have to be made as speciality polymers because the commercially availiable grades are of such a high molecular weight that their melt viscositites at any temperature below their decomposition temperature is too high for adequate fibre impregnation particularly where high loading of fibre, for example at least 50% by volume of fibre is required. Typically, commercially available thermoplastic polymers have a melt viscosity of at least 100 Ns/$m^2$. It is increasingly difficult to achieve adequate fibre wetting at high fibre concentrations particularly in a continuous process as the melt viscosity increases above 100 Ns/$m^2$.

A continuous process has how been devised for producing fibre-reinforced products in which it is possible to get an excellent level of fibre wetting by the polymer melt even though a high molecular weight product is used and in which high fibre loadings are achieved.

Accordingly there is provided a process of producing a fibre-reinforced composition containing at least 30% by volume of reinforcing filaments comprising drawing a plurality of continuous filaments through a melt comprising a mixture of a thermoplastic polymer and a plasticiser for the polymer in the weight ratio between 1:4 and 99:1 of polymer to plasticiser, preferably in the weight ratio 1:1 to 19:1, the plasticiser being thermally stable at least up to the temperature of the melt and having volatility characteristics such that the plasticiser is not substantially volatilised from the composition at the melt temperature of the composition.

Surprisingly, fibre-reinforced compositions can be produced in which the presence of substantial amounts of residual plasticiser do not detract from the strength properties achievable in the absence of the plasticiser.

By a "plasticiser" in the context of this invention is meant a material which will enable the melt to be obtained from a polymer having a lower melt viscosity than that of the polymer alone measured under the same conditions. Although the combination of polymer and plasticiser will normally exist as one phase this is not essential and more than one phase may exist.

It is an essential feature of the invention that the polymer in the mixture is present in melt form. The temperature of the melt must be above the glass transition temperature (Tg) of the polymer component. In the case of a crystalline polymer its melting point may be well above its Tg so that the temperature of the melt must be well above the Tg of the polymer employed. It is not necessary in every case that the temperature of the melt is above the melting temperature of the polymer itself because in some cases the plasticiser will lower the melting point of the polymer.

By the term "continuous fibres" or "plurality of continuous filaments" is meant any fibrous product in which the fibres are sufficiently long to give a roving or tow of sufficient strength, under the processing conditions used, to be hauled through the molten polymer without the frequency of breakage which would render the process unworkable. Suitable materials are glass fibre, carbon fibre, jute and high modulus synthetic polymer fibres. In the latter case it is important that the polymer fibres conform to the proviso of having sufficient strength to be capable of being hauled through the polymer melt without breakage disrupting the process. In order to have sufficient strength to be hauled through the impregnation system without breakage the majority of the continuous fibres of the fibrous product should lie in one direction so that the fibrous procuct can be drawn through molten polymer with the majority of the continuous fibres aligned. Fibrous products such as mats made up of randomly disposed continuous fibrous are not suitable for use in the invention unless they form part of a fibre structure in which at least 50% by volume of the fibres are aligned in the direction of draw.

The continuous fibres may be in any form having sufficient integrity to be pulled through the molten polymer but conveniently consist of bundles of individual fibres or filaments, hereinafter termed "rovings" in which substantially all the fibres are aligned along the length of the bundles. Any number of such rovings

may be employed. In the case of commercially available glass rovings each roving may consist of up to 8000 or more continuous glass filaments. Carbon fibre tapes containing up to 6000 or more carbon fibres may be used. Cloths woven from rovings may also be suitable for use in the present invention. The continuous fibres may be provided with any of the conventional surface sizes, particularly those designed to maximise bonding between the fibre and the matrix polymer.

Compositions made according to the process of the invention contain at least 30% by volume, preferably at least 40% by volume and desirably at least 50% by volume of reinforcing fibres.

It is to be understood that the invention is not limited to the use of high molecular weight polymers, that is those having a melt viscosity of more than 100 $Ns/m^2$ measured below the decomposition temperature of the polymer and at zero shear rate. The invention is also very useful when applied to low viscosity polymers because of the improvements that can be obtained in respect of ease of running stability of the continuous process and the higher fibre contents achievable.

Although the process can be applied by using a melt bath of the polymer/plasticiser mixture, through which the continuous tow or roving is pulled over at least one spreader surface, such a melt bath presents a disadvantage in respect of the containment of vaporised plasticiser. European Patent Publication No. 56703 describes an impregnation process in which the amount of molten polymer present at a given time is minimised. By adapting this process the amount of mixture present as a melt at any given time is minimised by using a process in which the continuous roving or tow is formed into a band comprising substantially contiguous filaments which are pulled over a spreader surface, preferably a heated spreader surface, to form a nip between the band and the spreader surface and a molten mixture of polymer and plasticiser is provided at the nip. In an alternative process at least part of the heat required to provide a molten mixture is provided by heating the fibre directly. Impregnation of the band formed by the contiguous filaments is effected by tensioning the continous band so that positive pressure is applied on the polymer melt by the band as it is pulled over the spreader surface. The mixture of polymer and plasticiser supplied to the nip may take a variety of forms. It may, for example, comprise a dry blend of polymer powder and plasticiser or a melt of the mixture prepared externally, for example in a screw extruder and metered as a melt to the nip. Yet again, the band of contiguous filaments may have been provided on one or both sides with a coating of the polymer/plasticiser mixture which is caused to impregnate the band and wet the filaments after the polymer has been melted and the coated band is biassed against at least one spreader surface, which is preferably a heated spreader surface. The coating may be in the form of a preformed film or tape of the polymer containing plasticiser or may be separate films of polymer and plasticiser which are fed in loose contact with the contiguous band of filaments and are impregnated into the band by biassing against a spreader surface, sufficient heat being supplied to melt the preformed films.

In one embodiment of the process of using a band of contiguous filament the continous filaments are most suitably tensioned and aligned by pulling them from rolls or reels over a series of spreader surfaces such as the surfaces of rods. This enables bundles of filaments to be spread out as far as possible into individual filaments which are under considerable tension. These filaments are guided to provide a band of contiguous filaments as they pass over a spreader surface. The shape of the spreader surface and the angle of contact of the filament band with the surface should be such as to provide a nip between the band and the heated spreader surface. The mixture of thermoplastics polymer and plasticiser is fed to the nip and sufficient heat is supplied to the system to provide a melt of the mixture at the nip. The melt impregnates and wets the fibres of the band as the band passes over the spreader surface by virtue of positive pressure between the band and the spreader surface.

This process may be further modified by providing at least one further spreader surface with which the at least partially melt impregnated fibre band forms a second nip by means of which a further supply of melt may be impregnated into the fibre band. Either surface of the partially impregnated band can be used to form the working surface of the nip.

The amount of polymer in the reinforced structure is controlled to a large extent by the tension in the band and the length of path over which the band contacts the spreader surface. Thus where the band is under high tension and contacts the spreader surface over a substantial area, so that the band is strongly urged against the spreader surface, the polymer content of the reinforced structure will be lower than under low tension/short contact path conditions.

The spreader surfaces and any subsequent surfaces used to improve impregnation or to improve surface finish are preferably in the form of cylindrical bars or rollers. These may be stationary or capable of either free or driven rotation. For example, the first impregnation surface may be a freely rotating roller which will be caused to rotate by the band at the speed of the band so that attrition of the fibre prior to impregnation or sizing by the melt is reduced to a minimum. It has been observed that if the first roll is rotated (either freely or driven) in the direction of the movement of the fibre at up to the speed of the fibre any accumulation of loose fibre on the band is carried through the system. This self-cleaning action is particularly useful in preventing an accumulation of fibre at the first roll which could cause splitting of the band. After the band has been impregnated with some of the melt mixture, preferably after being provided with further molten mixture on the other side of the band by means of a second freely rotatable heated surface, the fibre is much less susceptible to attrition and may be subjected to treatments to improve wetting of the fibres. Thus the polymer-containing band may be passed over at least one roller driven in a

direction opposite to that of the travel of the band to increase the local work input on the band and maximise wetting. In general, the degree of wetting and the speed of the process may be increased by increasing the number of surfaces at which there is a work input.

A further advantage of the process employing a band of fibre to form a nip, over the process which requires the use of a bath of the molten mixture, is that of reducing the risk of degradation. Thus the relatively small amount of melt mixture present in the nip between the fibre band and the spreader surface ensures that large quantities of polymer are not held at an elevated temperature for prolonged periods. Provision can also be made to include a scraper blade at positions at which the melt mixture is fed to the nip to remove any excess polymer which might accumulate during processing and which might be subject to thermal degradation.

The impregnated band produced by the process of the invention may be subjected to further treatments depending on the intended shape and purpose of the end product. The separated filaments in the impregnated band may, for example, be drawn together through a die to provide a profile of considerably greater thickness than the impregnated band. A limited amount of shaping may be effected in such a die to provide a shaped profile.

The impregnated products of the processes hereinbefore described may be wound on rolls for subsequent use in fabrication processes requiring a continuous product or may be chopped into lengths for subsequent fabrication. The continuous lengths may be used to fabricate articles, for example, by winding the heat-softened product around a former, or, for example, by weaving a mate from tapes or strips of the product. The impregnated product may be chopped into pellets or granules in which the aligned fibres have lengths from 3 mm up to 100 mm. These may be used in conventional moulding or extrusion processes.

When glass fibre is used the fibre content of the product of the invention should be at least 50% by weight of the product to maximise the physical properties of the product. The upper limit of fibre content is determined by the amount of polymer required to wet out the individual fibres of the roving. In general it is difficult to achieve good wetting with less than 20% by weight of polymer although excellent results are obtainable using the process of the invention to incorporate 30% by weight of polymer in the fibre-reinforced composition.

The thermoplastic polymers used in the invention are preferably aromatiic thermoplastic polymers containing aromatic repeat units in the chain, such as polysulphones, polyethersulphones, polyetherketones, polyetheretherketones, polyarylene oxides, polyarylene sulphides, aromatic polyamides, aromatic polyesters, aromatic polycarbonates and polyetherimides. In general, the thermoplastic aromatic polymers used in the compositions of this invention comprise repeat units of the general formula

$$—Ar—X—$$

where Ar is selected from mono or polycyclic aromatic radicals and X is selected from at least one of O, S, $SO_2$, O.CO, O.CO.O, CO,

—NHCO— and 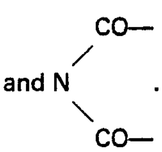 .

AR and/or X may vary from unit to unit in the polymer chain.

Particularly useful are the class of polyetherketones which contain the recurring unit (I):

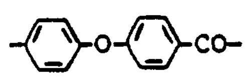

Such polymers are disclosed, inter alia, in British patent specification 1 414 421 which describes such polymers containing the unit (I) as the sole repeating unit or in conjunction with the repeating unit (II):

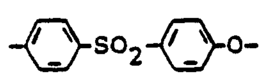

A preferred polyetheretherketone having the repeating unit (III):

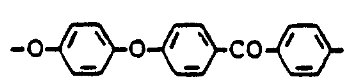

either alone or in conjunction with other repeating units is disclosed in European patent publication No.

1879. The other repeating units present in the polymers described in the European application may be of the repeating unit (IV):

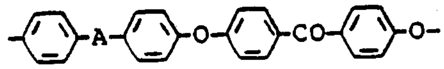

where A is a direct link, oxygen, sulphur, —$SO_2$—, —CO— or a divalent hydrocarbon radical. The repeat units may also be of formula (V):

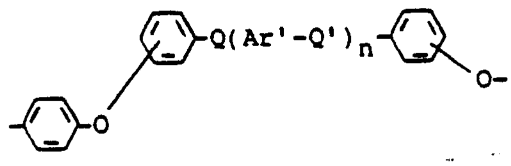

where the oxygen atom in the sub-units:

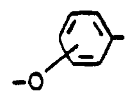

are *ortho* or *para* to the groups Q and Q', Q and Q' which may be the same or different are —CO— or —$SO_2$, Ar' is a divalent aromatic radical, and n is 0, 1, 2 or 3. The polymer or repeat unit III is hereinafter termed PEEK.

Another particularly useful class of compounds are the aromatic polysulphones. Thermoplastic aromatic polysulphones generally have at least some units of the structure

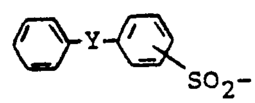

where Y is 0 or S or the residue of an aromatic diol such as a 4,4'-bisphenol. Those polysulphones containing ether linkages between some of the aromatic rings are known as aromatic polyethersulphones and may be more generally defined as polymeric material containing repeat units of the general formula

—E—O—E'—O—

in which E is the residuum obtained by removal of the halogen atoms of a dihalobenzenoid compound in which each halogen atom is activated by an —$SO_2$— group *ortho* or *para* thereto, and E' is the residuum obtained by removal of the hydroxyl groups from a bisphenol. E and E' may be the same or different and indeed E and/or E' may vary from unit to unit in the polymer chain.

Where E is the same as E', it may be considered to be the residuum resulting from the removal of the halogen atom and the hydroxyl group from a halophenol in which the halogen atom is activatved by an —$SO_2$— group *ortho* or *para* thereto. Up to 50% of the —$SO_2$— groups in the halophenol, dihalobenzenoid compound or bisphenol may be replaced by —CO— groups.

The residue E preferably has the structure

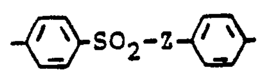

where Z is a direct link or —Ar—$SO_2$— where Ar is a divalent aromatic radical such as biphenylylene

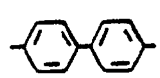

Examples of such polyethersulphones have the repeating units

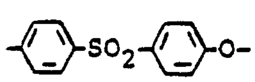 and 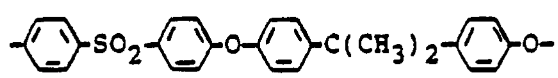

Other polymers incorporate

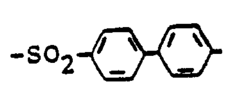

units in the polymer chain, e.g. to give the repeat units

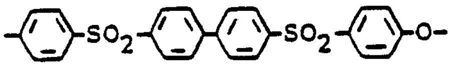

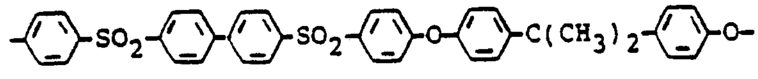

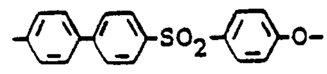

which may be present by themselves or in conjuction with repeat units such as

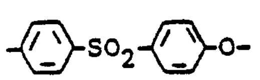 and 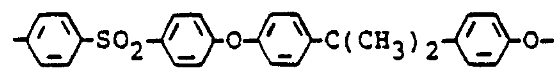

Examples of polyethersulphones and processes for their production are described in British patent specifications 1 016 245, 1 060 546, 1 078 234, 1 109 842, 1 122 192, 1 133 561, 1 153 035, 1 153 528, 1 163 332, 1 177 183, 1 234 301, 1 264 900, 1 265 144, 1 296 383, 1 298 821 and 1 303 252, Canadian patent specification 847 963, German OLS specification 1 938 806 and 2 433 400 and Swiss patent specification 491 981.

The plasticisers which are suitable for use in the invention are materials which are thermally stable at the elevated temperatures which are characteristic of the melting points of the aromatic polymers used in the invention, and which are substantially involatile at the temperatures require for form a melt of the polymer and plasticiser. Suitable plasticisers having these characteristics are found in the classes aromatic ketones, aromatic sulphones and aromatic esters. Typical high boiling materials which are suitable for use with high melting polymers, such as polyetherketones, are diphenoxy benzophenone and diphenoxydiphenyl sulphone.

The mixture of plasticiser and polymer may be provided by any conventional technique for providing mixture. For example, mixture may be a dry blend of polymer and plasticiser, a mixture which has been intimately mixed by compounding in a screw extruder, a mixture prepared by coating granules of the polymer with a solution of a plasticiser and volatilising the solvent from the coated granules or in some cases a suitable plasticiser may be used in the course of producing the aromatic polymer. Whereas in the normal course of isolating such polymer the plasticiser would need to be removed the plasticised product constitutes an ideal and cheaper raw material for the present invention than the isolated polymer.

Although the major use of the impregnated products obtained from the processes hereinbefore described is in applications requiring the use of long lengths of the products, that is greater than 100 mm long, the products find particular utility when chopped into pellets or granules in which the reinforcing fibres have a length of at least 3 mm and preferably at least 10 mm. These products may be used in the conventional fabrication process such as injection moulding and show advantages over prior art products in pellet form because the fibre length in the pellet is retained to a much greater extent in articles fabricated from the pellets of the invention than when using the prior art products. This greater retention of fibre length is believed to be a result of the greater protection afforded to the individual reinforcing filaments in the product of the invention by virtue of the good wetting by polymer which arises from use of the processes hereinbefore described.

This aspect of the invention is particularly important because it enables reinforced articles to be formed in versatile operations, such as injection moulding, which employ screw extrusion processes to melt and homogenise the feed material, with a surprisingly high retention of fibre length and consequent enhancement of physical properties. Thus the product of the invention enables moulded articles to be obtained from fabrication processes which employ screw extrusion which articles contain at least 50% and preferably at least 70% by weight of the fibres in the article of a length of at least 3 mm long. This is considerably longer than currently obtainable from the commerically available reinforced products.

The products suitable for injection moulding may be used directly or may be blended with pellets of other thermoplastics products. These other products may be of the same polymer but having different molecular weight or may be of a different polymer providing that the presence of the different polymer does not adversely affect the overall balance of properties of the composition. The other products may be an unfilled polymer or may contain a particulate or fibrous filler. Blends with materials containing the conventionally produced reinforced moulding powders, that is moulding powders with reinforcing fibres up to about 0.25 mm long are particularly suitable because the overall reinforcing fibre content of the blend can be kept high to produce maximum strength even though the shorter reinforcing fibres do not contribute so effectively as the long fibres present from the product of the present invention.

The invention is further illustrated by reference to the following examples.

Example 1

In this example two high boiling point additives were assessed to determine their suitability as plasticisers for a high molecular weight sample of poly(etheretherketone), and their volatility with respect to the processing temperature range of the polymer.

The plasticising characteristics were assessed by differential scanning calorimetry techniques to measure the glass transition temperature (Tg) of polymer compositions containing the potential plasticisers in comparison with the polymer itself. Values were also obtained for the melting point of the compositions (Tp), the temperature (Tn) at which crystals start to form from the glassy state as the temperature is raised above the Tg, the temperature (Ts) at which crystal growth starts on cooling, and Tc, the temperature at which the crystallisation rate is at its maximum.

A sample of polyetheretherketone powder (PEEK) having a high molecular weight (a melt viscosity of 200 Ns/m$^2$ at 370°C at zero shear rate) was dry blended with diphenoxybenzophenone powder to give a composition containing 5% by weight of the additive. A 10 mg sample of the composition was dried overnight at 80°C under vacuum. The dried sample was heated to 400°C for 2 minutes and then quenched in liquid nitrogen to remove any residual crystallinity. The sample was placed in a Perkin Elmer DSC—2 machine and heated at 20°C/minute to a temperature of 400°C, held at this temperature for 2 minutes and then cooled at 20°C/minute.

The table below records the values obtained for the polymer alone, and compositions containing 5% by weight of diphenoxybenzophenoone (DPBP) and diphenoxy diphenylsulphone (DPDPS) respectively.

TABLE 1

| Additive (% by weight) | DSC values (°C) | | | | |
|---|---|---|---|---|---|
| | Tg | Tn | Tp | Ts | Tc |
| NIL | 138 | 169 | 343 | 308 | 298 |
| 5% DPBP | 132 | 167 | 342 | 306 | 297 |
| 5% DPDPS | 126 | 165 | 341 | 305 | 295 |

The Tg values show that both additives have a plasticising effect on PEEK with the melting point (Tp) also being slightly reduced.

The thermal stability and volatility of the additives was assessed in the presence of the polymer using a thermogravimetric balance (supplied by Stanton Redcroft) at a heating rate of 5°/minute in air. The analysis of samples of the dry blends of PEEK and the stabilisers compared with the PEEK alone showed that the additives were substantially involatile in the presence of the PEEK up to the decomposition temperature of the PEEK.

A dry blend of the PEEK used above and diphenoxybenzophenone (containing 5% by weight of the additive) was used as a feedstock to impregnate carbon fibre tow (obtained from Courtaulds PLC as XAS (unsized) in the process described in Example 32 of European Patent Publication No. 56703. As a control run the PEEK, containing no additive, was run through the same process. A further run was performed using a dry blend of the same PEEK together with 5% by weight of diphenoxydiphenylsulphone. The products were obtained as a continuous pultruded strip about 50 mm wide.

Test pieces were formed from this strip by stacking 20 plies 150 mm in length in a matched die compression moulding tool. This tool was heated to 380°C, in a conventional laboratory press. The moulding was held at light pressure for 5 minutes to enable the sample to reach equilibrium temperature. The pressure was then held at $5 \times 10^6$ N/m$^2$ for 5 minutes before being cooled under pressure to 150°C before removal from the press. The cooling stage too approximately 12 minutes. The mould was allowed to cool to ambient temperature and the moulding was then extracted.

Mouldings of thickness between 2 and 3 mm were formed in this way. The results obtained are given in Table 2.

TABLE 2

| Polymer composition | Carbon fibre content (% by wt) | Transverse flexural strength ($MN/m^2$) (1) | | Short beam shear strength ($Mn/m^2$) (3) |
|---|---|---|---|---|
| | | Dry | Wet (2) | |
| PEEK | 57 | 100 (13) | 83 (2) | 75 |
| PEEK + 5% DPBP | 59 | 130 (3) | 111 (5) | 84.5 |
| PEEK + 5% DPDPS | 56 | 121 (12) | 79 (11) | 86.7 |

Results are quoted as average of 4 results with the mean deviation in brackets.

(1) Measured according to ASTM D790—80 using a 40 mm span.
(2) Conditioned for 24 hours in boiling water.
(3) Measured according to ASTM D2344—72, using a span to sample thickness ratio of 5:1.

Example 2

The general procedure of Example 1 was used to impregnate continuous carbon fibre roving (AS4 supplied by Hercules Corp) using a polymer of methyl methacrylate ('Diakon' MG obtainable from Imperial Chemical Industries PLC) having a melt viscosity of 1200 $Ns/m^2$ at 250°C and zero shear rate and dibutyl phthalate as the melt plasticiser ('Diakon' is a registered trade mark). The procedure was carried out using a weight ratio of polymer to plasticiser of 80:20 at a melt temperature of 250°C and a pull through of 30 cm/minute. A product containing 47% by weight of fibre was produced with fair impregnation. The procedure was repeated using a polymer/plasticiser ratio of 1:1. A well impregnated product having a fibre content of 59% was produced.

In a control run without plasticiser an attempt was made to impregnate using the acrylic polymer at a temperature of 250°C. Great difficulty in running was experienced, with frequent breaks in the carbon fibre tow because of the high melt viscosity. The product obtained (34% by weight carbon fibre) exhibited very poor wetting of the fibre by the polymer.

These prepregs were made up into sheet stock (5 layer woven (0.90/±45/0.90/±45/0.90)) and moulded at 210°C. The samples were studied in the instrumented fall weight impact test (all results normalised to 2.5 mm thick).

TABLE 3

| | Fibre Content Wt. % | Resin | Stiffness Gradient N/mm | Yield Force N | Initiation Energy (J) | Failure Energy (J) |
|---|---|---|---|---|---|---|
| A | 34 | 'Diakon' MG | 800 (50) | 2170 (200) | 4.5 (0.8) | 14.9 (0.7) |
| B | 47 | 80% 'Diakon' MG + 20% DBP | 1280 (50) | 3880 (200) | 7.5 (1.1) | 22.0 (1.2) |
| C | 59 | 50% 'Diakon' MG + 20% DBP | 1900 (290) | 6030 (1090) | 9.0 (1.9) | 32.5 (5.3) |

Standard deviation in parenthesis.

Example 3

The general procedure of Example 1 was used to produce glass-reinforced nylon 6 prepreg 'Akulon' M921D (nylon 6 containing 10% caprolactam) was used to impregnate a continuous glass roving ('Vetrotex' R099, 12 ends each 2400 tex) at a temperature of 265°C ('Akulon' and 'Vetrotex' are registered trade marks). The glass roving was pulled off at a rate of 45 cm/minute. Although some of the caprolactam volatilised during the impregnation procedure the majority remained in the sample. The pultrusion contained about 74% glass fibre.

In a control run 'Akulon' K222D (nylon 6) was used without plasticiser. The glass fibre content was approximately 74%. The flexural modulus of the product containing plasticiser was 55 GN/m$^2$ compared with a value of 51 GN/m$^2$ for the unplasticised product. The greater stiffness of the plasticised product was attributed to better wetting of the glass fibres.

**Claims**

1. A process of producing a fibre-reinforced composition containing at least 30% by volume of reinforcing fibres comprising drawing a plurality of continuous filaments through a melt comprising a mixture of a thermoplastic polymer and a plasticiser for the polymer in the weight ratio between 1:4 and 99:1 of polymer to plasticiser, the plasticiser being thermally stable at least up to the temperature of the melt and having volatility characteristics such that the plasticiser is not substantially volatilised from the composition at the melt temperature of the composition, said plasticiser reducing the viscosity of the melt in comparison with that of the polymer alone.

2. A process according to claim 1 wherein the melt viscosity of the polymer in the absence of the plasticiser is at least 100 Ns/m$^2$ at zero shear rate measured below the decomposition temperature of the polymer.

3. A process according to either of claim 1 or claim 2 in which the polymer/plasticiser melt is contained within a melt bath provided with at least one spreader surface over which the plurality of filaments are pulled.

4. A process according to either of claims 1 or 2 in which the plurality of continuous filaments is formed into a band of contiguous filaments which are pulled over a spreader surface to form a nip between the band and the spreader surface and a molten mixture of polymer and plasticiser is provided at the nip, impregnation of the band formed by the contiguous filaments being effected by tensioning the continuous band so that positive pressure is applied on the polymer melt by the band as it is pulled over the spreader surface.

5. A process according to claim 4 in which the polymer melt is maintained in a molten state during impregnation by supplying at least part of the heat required to at least one spreader surface.

6. A process according to claim 4 in which the polymer melt is maintained in a molten state during impregnation by supplying at least part of the heat required directly to the filaments.

7. A process according to any one of the preceding claims in which the thermoplastic polymer is an aromatic polymer and comprises a polymer of repeat unit of the general formula:

$$—Ar—X—$$

where Ar is selected from mono or polycyclic aromatic radicals and X is selected from at least one of O, S, $SO_2$, O.CO, O.CO.O, CO,

—NHCO— and 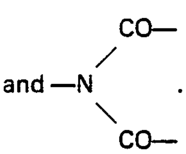 .

8. A process according to claim 7 in which the aromatic polymer is selected from polysulphones, polyethersulphones, polyetherketones, polyetheretherketones, polyarylene oxides, polyarylene sulphides, aromatic polyamides, aromatic polyesters, aromatic polycarbonates, and aromatic polyetherimides.

9. A process according to any one of the preceding claims in which the polymer is a polyetherketone or polyetheretherketone and the plasticiser is an aromatic sulphone or aromatic ketone.

10. A thermoformable fibre-reinforced structure produced according to the process of any one of the preceding claims characterised in that it contains at least 30% by volume of continuous, aligned filaments in a thermoplastic polymer matrix having a melt viscosity of at least 100 Ns/m$^2$ at zero shear rate measured below the decomposition temperature of the polymer.

**Patentansprüche**

1. Verfahren zur Herstellung einer mit Fasern verstärkten Zusammensetzung, die mindestens 30 Vol.% Verstärkungsfasern enthält, bei dem

— eine Vielzahl von Endlosfäden durch eine Schmelze gezogen wird, die ein Gemisch aus einem thermoplastischen Polymer une einem Plastifiziermittel für das Polymer im Gewichtsverhältnis zwischen 1:4 und 99:1 von Polymer zu Plastifiziermittel aufweist,

— das Plastifiziermittel zumindest bis zur Temperatur der Schmelze thermisch stabil ist und solche Flüchtigkeitseigenschaften aufweist, daß das Plastifiziermittel aus der Zusammensetzung bei der Schmelztemperatur der Zusammensetzung nicht wesentlich verdampft, und

— das Plastifiziermittel die Viskosität der Schmelze im Vergleich zu derjenigen des Polymeren für sich allein erniedrigt.

2. Verfahren nach Anspruch 1, bei dem die Schmelzviskosität des Polymeren in Abwesenheit des Plastifiziermittels mindestens 100 $Ns/m^2$ bei einer Scherrate von null beträgt, gemessen unterhalb der Zersetzungstemperatur des Polymeren.

3. Verfahren nach Anspruch 1 oder 2, bei dem die Polymer/Plastifizier-Schmelze innerhalb eines Schmelzbades enthalten ist, das mit mindestens einer Spreizeroberfläche versehen ist, über die die Vielzahl von Fäden gezogen wird.

4. Verfahren nach Anspruch 1 oder 2, bei dem die Vielzahl von Endlosfäden in ein Band von aneinanderliegenden Fäden verformt wird, die über eine Spreizeroberfläche unter Bildung eines Knickes zwischen dem Band und der Spreizeroberfläche gezogen werden und ein schmelzflüssiges Gemisch aus Polymer und Plastifiziermittel an der Knickstelle vorgesehen wird, wobei die Imprägnierung des aus den Endlosfäden gebildeten Bandes durch Dehnung des Endlosbandes bewirkt wird, so daß positiver Druck auf die Polymerschmelze durch das Band ausgeübt wird, wenn es über die Spreizeroberfläche gezogen wird.

5. Verfahren nach Anspruch 4, bei dem die Polymerschmelze in einem schmelzflüssigen Zustand während der Imprägnierung gehalten wird durch Zuführung mindestens eines Teils der erforderlichen Wärme zu mindestens einer Spreizeroberfläche.

6. Verfahren nach Anspruch 4, bei dem die Polymerschmelze in einem schmelzflüssigen Zustand während der Imprägnierung gehalten wird durch Zuführung mindestens eines Teils der erforderlichen Wärme direkt zu den Fäden.

7. Verfahren nach einem der vorhergehenden Ansprüche, bei dem das thermoplastische Polymer ein aromatisches Polymer ist und ein Polymer mit wiederkehrenden Einheiten der allgemeinen Formel

$$—Ar—X—$$

darstellt, worin Ar aus mono- oder polycyclischen aromatischen Resten und X aus mindestens einem der Reste O, S, $SO_2$, O.CO, O.CO.O, CO, —NHCO— und

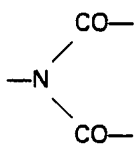

ausgewählt sind.

8. Verfahren nach Anspruch 7, bei dem das aromatische Polymer aus Polysulfonen, Polyethersulfonen, Polyetherketonen, Polyetheretherketonen, Polyarylenoxiden, Polyarylensulfiden, aromatischen Polyamiden, aromatischen Polyestern, aromatischen Polycarbonaten und aromatischen Polyetherimiden ausgewählt ist.

9. Verfahren nach einem der vorstehenden Ansprüche, bei dem das Polymer ein Polyetherketon oder Polyetheretherketon und das Plastifiziermittel ein aromatisches Sulfon oder aromatisches Keton sind.

10. Wärmeverformbares faserverstärktes Gebilde, das nach dem Verfahren gemäß einem der vorstehenden Ansprüche hergestellt ist, dadurch gekennzeichnet, daß es mindestens 30 Vol.% endlose, ausgerichtete Fäden in einer thermoplastischen Polymermatrix, die eine Schmelzviskosität von mindestens 100 $Ns/m^2$ bei einer Scherrate null, gemessen unterhalb der Zersetzungstemperatur des Polymeren, aufweist, enthält.

**Revendications**

1. Procédé de production d'une composition renforcée de fibres contenant au moins 30% en volume de fibres de renforcement, comprenant l'étirage d'un grand nombre de filaments continus à travers une masse fondue comprenant un mélange d'un polymère thermoplastique et d'un plastifiant pour le polymère selon un rapport pondéral compris entre 1:4 et 99:1 du polymère au plastifiant, le plastifiant étant thermiquement stable au moins jusqu'à la température de la masse fondue et ayant des caractéristiques de volatilité telles que le plastifiant n'est pas notablement volatilisé à partir de la composition à la température de la composition à l'état fondu, ce plastifiant réduisant la viscosité de la masse fondue par rapport à celle du polymère seul.

2. Procédé suivant la revendication 1, dans lequel la viscosité à l'état fondu du polymère en l'absence du plastifiant est d'au moins 100 $Ns/m^2$ à un taux de cisaillement nul, mesuré en dessous de la température

de décomposition du polymère.

3. Procédé suivant la revendication 1 ou 2, dans lequel la masse fondue de polymère/plastifiant est contenue dans un bain de masse fondue pourvu d'au moins une surface étaleuse sur laquelle est tiré le grand nombre de filaments.

4. Procédé suivant l'une quelconque des revendications 1 ou 2, dans lequel le grand nombre de filaments continus est mis sous forme d'une bande de filaments contigüs qui sont tirés sur une surface étaleuse pour former une pince entre la bande et la surface étaleuse et un mélange fondu de polymère et de plastifiant est envoyé dans la pince, l'imprégnation de la bande formée par les filaments contigüs étant effectuée par mise sous tension de la bande continue, si bien qu'une pression positive est appliquée sur la masse fondue de polymère par la bande, alors qu'elle est tirée sur la surface étaleuse.

5. Procédé suivant la revendication 4, dans lequel la masse de polymère fondu est maintenue à l'état fondu pendant l'imprégnation par apport d'au moins une partie de la chaleur requise à au moins une surface étaleuse.

6. Procédé suivant la revendication 4, dans lequel la masse de polymère fondu est maintenue à l'état fondu pendant l'imprégnation par apport d'au moins une partie de la chaleur requise directement aux filaments.

7. Procédé suivant l'une quelconque des revendications précédentes, dans lequel le polymère thermoplastique est un polymère aromatique et comprend un polymère ayant une unité répétée de formule générale:

$$—Ar—X—$$

dans laquelle Ar est choisi parmi des radicaux aromatiques mono- ou polycycliques et X est choisi parmi au moins l'un des O, S, $SO_2$, O.CO, O.CO.O, CO, —NHCO— et

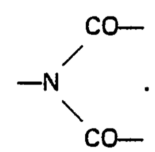

8. Procédé suivant la revendication 7, dans lequel le polymère aromatique est choisi parmi des polysulfones, des polyéthersulfones, des polyéthercétones, des polyétheréthercétones, des polyarylène oxydes, des polyarylène sulfure, des polyamides aromatiques, des polyesters aromatiques, des polycarbonates aromatiques et des polyétherimides aromatiques.

9. Procédé suivant l'une quelconque des revendications précédentes, dans lequel le polymère est une polyéthercétone ou une polyétheréthercétone et le plastifiant est une sulfone aromatique ou une cétone aromatique.

10. Structure thermoformable renforcée de fibres produite par le procédé de l'une quelconque des revendications précédentes, caractérisée en ce qu'elle contient au moins 30% en volume de filaments continus alignés dans un polymère thermoplastique ayant une viscosité à l'état fondu d'au moins 100 Ns/$m^2$ à un taux de cisaillement nul, mesurée en dessous de la température de décomposition du polymère.